# EUROPEAN PATENT APPLICATION

(11) **EP 4 009 685 A1**
(43) Date of publication of application: **08.06.2022**
(21) Application number: 21162379.8
(22) Date of filing: 12.03.2021
(51) Int. Cl.: H04W 12/40, H04L 29/06, H04W 8/20, H04W 60/00, H04W 12/06

(54) **SYSTEM FOR PROVIDING A UICC COMMUNICATION BETWEEN A UE AND A UICC SERVICE**

(30) Priority: 04.12.2020 EP 20211989
(71) Applicant: Shenzhen Goodix Technology Co., Ltd., Shenzhen, Guangdong 518045 (CN)
(72) Inventor: Scheffel, Robert, 01069 Dresden (DE); von Borany, Andreas, 01768 Glashütte (DE); Fröhlich, Martin, 01099 Dresden (DE)
(74) Representative: Lippert Stachow Patentanwälte Rechtsanwälte Partnerschaft mbB

(57) **Abstract**

**Summary**

The invention discloses a system for providing a UICC communication between a UE and a UICC service. The objective of the invention to further reduce the cost per UE in a local area network or generally in a cellular network will be solved by a system comprising a plurality of user equipment (UEs), a base station and a cellular network, whereas the UEs are connected via a 3GPP based cellular connection to the base station and the base station is connected via a 3GPP based cellular connection with the cellular network, wherein the UEs are configured without a universal integrated circuit card (UICC) and the system comprises a UICC service that is connected via a side channel to each UE or the side channel is established via said 3GPP based cellular connections over the cellular network and the base station with the UEs.

## Description

The invention relates to a system for providing a UICC communication between a UE and a UICC service.

All 3GPP based cellular user equipment (UE), such as mobile phone, but also Internet of Things (IoT) devices, require a mechanism to prove their identity against the cellular network and to exchange keys for a secure connection.

Therefore, the Universal Integrated Circuit Card (UICC - the hardware) also called SIM card, with a USIM application (the software) running on it, is used. The UICC is a high secure hardware module that is connected (wired) to the UE. The USIM application contains all secret keys and provider specific information. The USIM application is provisioned by the cellular operator.

The secret keys inside the USIM application stored on the UICC must not be read out. The keys are used to authenticate the UE against the cellular network with the help of a cryptographic algorithm. Furthermore, the USIM application generates the secret session keys for the UE.

Thus, each UE requires a USIM application (running on the UICC) to attach to a core network successfully. Adding provider keys and provider specific setting (profile) is called provisioning.

The modem to UICC communication is done via wired serial interface which is standardized in ISO/IEC 7816-3.

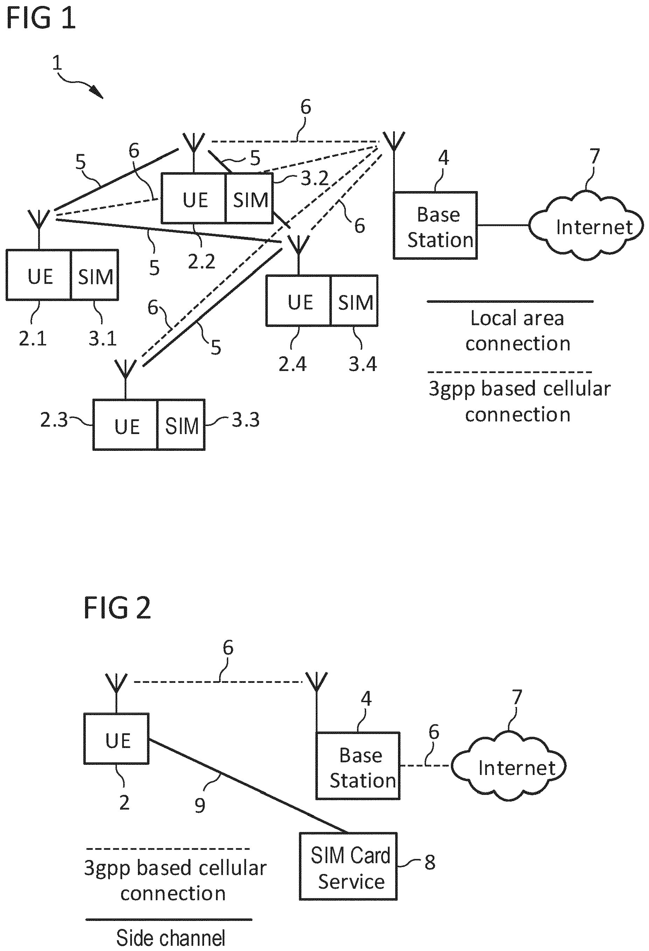

Local area networks with multiple devices require a UICC (SIM) for each UE 2. This is exemplary shown in figure 1. Every UE 2.1 to 2.4 communicating with a base station 4 comprises a SIM card 3.1 to 3.4. The UEs 2.1 to 2.4 communicate over 3GPP base cellular connection 6 with the base station 4, the connections are presented in dashed lines. The UEs 2.1 to 2.4 which communicate among each other over a local area connection 5 form a local area network 1. The local area connections 5 are presented by solid lines. Local area connection technologies can be wired or wireless, like IEEE-802.3 (Ethernet), IEEE-802.11 (WiFi), IEEE-802.15.4 (WPAN) or BT/BLE (Bluetooth, Bluetooth Low Energy).

The disadvantage of a UICC is that a separated secure hardware element, a SIM card 3, is required for each UE 2. This causes additional system costs. Especially for applications with a huge amount of devices, it is expensive to equip every device with a SIM-card.

The objective of the invention is to further reduce the cost per UE in a local area network or generally in a cellular network.

The objective of the present invention will be solved by a system comprising a plurality of user equipment (UEs), a base station and a cellular network, whereas the UEs are connected via a 3GPP based cellular connection to the base station and the base station is connected via a 3GPP based cellular connection with the cellular network, wherein the UEs are configured without a universal integrated circuit card (UICC) and the system comprises a UICC service that is connected via a side channel to each UE or the side channel is established via said 3GPP based cellular connections over the cellular network and the base station with the UEs.

The invention describes a side-channel between the UE and a UICC service, also called SIM card service. As described above, for 3gpp based cellular connections each UE requires a SIM card to authenticate against the network. Traditionally the SIM card has a wired connection to the UE. This physical connection is now replaced by a virtual connection via a side channel. The SIM card functionality is now outsourced to a dedicated SIM card service that either can handle the connection with physical SIM cards or can provide virtual SIM card functionality.

So, the idea of the invention is to have a server which provides SIM functionality. A side channel is used to transfer the SIM card communication between the UE and the SIM card service.

The advantages of the invention can be summarized that the inventive system saves cost and effort, centralizes the SIM card management, uses virtual SIM card profiles and can share subscription/SIM cards.

In a variant of the inventive system, the side channel that connects each UE with the UICC service uses a separate connection technology.

According to a variant of the inventive system, the separate connection technology is IEEE-802.3 (Ethernet) and / or IEEE-802.11 (WiFi) and / or IEEE-802.15.4 (WPAN).

So, the side channel can be realized in two different flavors:
1) The side channel uses a separate connection technology, like IEEE-802.3 (Ethernet), IEEE-802.11 (WiFi), IEEE-802.15.4 (WPAN).
2) The side channel is established via the 3gpp cellular connection.

The second flavor would require an extension of the 3gpp cellular standard to allow communication to an external SIM service before the actual network authentication, which would require the SIM card. The extension would lay in the NAS layer allowing communication to the UICC service prior to network authentication.

The advantage of using different or separate connection technologies for the interconnection between the plurality of UEs in the system according to the first flavor is that one can react to all circumstances and different UEs can be treated equally in the system. The invention can be used independently of the connection technology.

In another variant of the inventive system, the side channel is configured to transfer Application Protocol Data Units (APDUs) between the UE and the UICC service.

A SIM card sharing protocol forwards the SIM card / UICC communication, so called Application Protocol Data Units (APDUs) from the UICC service to a UE that requires a SIM card.

In a further variant of the inventive system, the side channel is encrypted.

The APDUs that are transferred between the UICC service and the UEs contain session key data in plain text. Therefore, the side channel must provide encryption, e. g. using TLS, to prevent eavesdropping.

In another further variant of the present invention, the side channel is configured to provide mutual authentication between UE and UICC service. The mutual authentication can be solved using TLS with pre-shared keys or certificates.

The invention will be explained in more detail using exemplary embodiments.

The appended drawings show
- Fig. 1: Local area network with a plurality of UEs according to the prior art, each UE require a UICC (SIM card);
- Fig. 2: The inventive system according to a first embodiment;
- Fig. 3: The inventive system according to a second embodiment.

Figure 2 discloses schematically the inventive system. A UE 2 of the system communicate via a 3GPP based cellular connection 6 with the base station 4. To authenticate the UE 2 against the cellular network 7 to which the base station 4 is also connected via a 3GPP based cellular connection 6, the UE 2 obtains the needed session keys from a UICC service 8, also called SIM card service as part of the inventive system. Therefore, in a first embodiment, a side channel 9 is established between the UE and the SIM card service. The side channel 9 uses a separate connection technology, like IEEE-802.3 (Ethernet), IEEE-802.11 (WiFi) and/or IEEE-802.15.4 (WPAN).

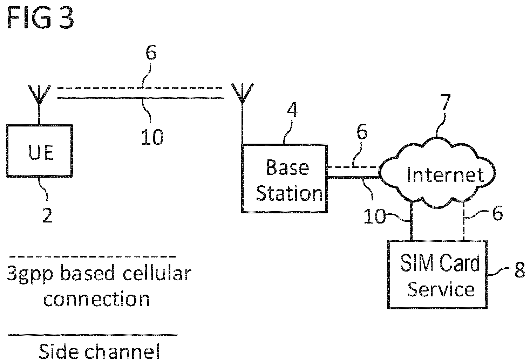

Figure 3 discloses schematically a second embodiment of the inventive system. Again, a UE 2 of the system communicate via a 3GPP based cellular connection 6 with the base station 4. To authenticate the UE 2 against the cellular network 7 to which the base station 4 is also connected via a 3GPP based cellular connection 6, the UE 2 obtains the needed session keys from a UICC service 8, also called SIM card service as part of the inventive system. But in the second embodiment the needed session keys are transferred over a side channel connection 10 that is established via the 3GGP based cellular connections 6 between the cellular network 7 and the base station 4 as well as between the base station 4 and the UE 2. This embodiment requires an extension of the 3gpp cellular standard to allow communication to an external SIM card service 8 before the actual network authentication, which would require the SIM card.

### List of Reference Signs

- 1: Local area network
- 2: User equipment
- 2.1 - 2.4: plurality of UEs in the LAN
- 3.1 - 3.4: SIM card
- 4: Base station
- 5: local area connection
- 6: 3GPP based cellular connection
- 7: core network, cellular network
- 8: UICC service
- 9: side channel using a separate connection technology
- 10: side channel using a 3GPP based cellular connection

## Claims

1. A system comprising a plurality of user equipment (2), UEs, a base station (4) and a cellular network (7), whereas the UEs (2) are connected via a 3GPP based cellular connection (6) to the base station (4) and the base station (4) is connected via a 3GPP based cellular connection (6) with the cellular network (7), wherein the UEs (2) are configured without a universal integrated circuit card, UICC, and the system comprises a UICC service (8) that is connected via a side channel (9) to each UE (2) or a side channel (10) is established via said 3GPP based cellular connections (6) over the cellular network (7) and the base station (4) with the UEs (2).

2. The system according to claim 1, wherein the side channel (9, 10) that connects each UE (2) with the UICC service (8) uses a separate connection technology.

3. The system according to claim 2, wherein the separate connection technology is IEEE-802.3 - Ethernet and / or IEEE-802.11 - WiFi and / or IEEE-802.15.4 - WPAN.

4. The system according to one of the claims 1 to 3, wherein the side channel (9, 10) is configured to transfer Application Protocol Data Units, APDUs, between the UE (2) and the UICC service (8).

5. The system according to one of the claims 1 to 4, wherein the side channel (9, 10) is encrypted.

6. The system according to one of the claims 1 to 5, wherein the side channel (9, 10) is configured to provide mutual authentication between UE (2) and UICC service (8).
